Europäisches Patentamt

European Patent Office

Office européen des brevets

(11) Publication number: **0 105 831**
A1

# (12) EUROPEAN PATENT APPLICATION

(21) Application number: 83710066.8

(22) Date of filing: 26.09.83

(51) Int. Cl.³: **C 09 K 5/04**

(30) Priority: 30.09.82 JP 171306/82
30.09.82 JP 171307/82
30.09.82 JP 171308/82

(43) Date of publication of application:
18.04.84 Bulletin 84/16

(84) Designated Contracting States:
DE FR GB IT

(71) Applicant: Daikin Kogyo Co., Ltd.
Shinhankyu Building No 1-12-39, Umeda Kita-ku
Osaka-shi Osaka-fu(JP)

(72) Inventor: Enjo, Naonori
1-32-4, Tarumi Suita-shi
Osaka(JP)

(72) Inventor: Noguchi, Masahiro
14-A418, Sekime 6-chome
Jyoto-ku, Osaka-shi Osaka(JP)

(72) Inventor: Ide, Satoshi
21/21, Hitotsuya 2-chome
Settsu-shi Osaka(JP)

(74) Representative: Schüler, Horst, Dr. European Patent
Attorney
Kaiserstrasse 41
D-6000 Frankfurt/Main 1(DE)

(54) Refrigerant composition.

(57) A refrigerant composition which comprises chlorodifluoromethane and a member selected from the group consisting of 1,1-difluoroethane, 1-chloro-1,1-difluoroethane and chlorotetrafluoroethane.

EP 0 105 831 A1

REFRIGERANT COMPOSITION

This invention relates to a refrigerant composition, namely, a working fluid composition for refrigerators.

Heretofore, chlorofluorohydrocarbons, fluorohydrocarbons or mixtures thereof having an azeotropic or like composition have been known as refrigerants. At present, dichlorofluoromethane (hereinafter referred to as Flon-12) or chlorodifluoromethane (hereinafter referred to as Flon-22) is mainly used as a refrigerant.

Recently, there is an increasing demand for development of a refrigerant having improved refrigeration characteristics, particularly an improved performance coefficient.

An object of the invention is to provide a refrigerant composition which have an improved performance coefficient. Here, the performance coefficient is indicated in terms of (refrigeration capacity/compression work). Since refrigeration capacity is quantity of heat per unit time taken away from a material to be cooled and compression work is quantity of work per unit time of the power required for operation of refrigerator, the performance coefficient corresponds to an efficiency of refrigeration.

- 2 -

Another object of the invention is to provide a refrigerant composition which contains chlorodifluoromethane, the refrigerant composition being superior to chlorodifluoromethane alone in refrigeration characteristics, particularly performance coefficient.

These objects and other features of this invention will become apparent from the following description.

We have made intensive research in an attempt to provide a refrigerant composition having an improved performance coefficient and found that combination of chlorodifluoromethane and a member selected from the group consisting of 1,1-difluoroethane, 1-chloro-1,1-difluoroethane and chlorotetrafluoromethane provides a refrigeration composition which is outstandinly superior to dichlorofluoromethane (Flon-12) or chlorodifluoromethane (Flon-22) alone in the performance coefficient. The present invention has been accomplished based on this novel finding.

Thus, according to this invention the above objects are accomplished by a refrigerant composition comprising chlorodifluoromethane and a member selected from the group consisting of 1,1-difluoroethane, 1-chloro-1,1-difluoroethane and chlorotetrafluoroethane.

Preferred embodiments of this invention include the following compositions.

(1)    A refrigerant composition comprising chlorodifluoromethane and 1,1-difluoroethane, particularly
comprising about 90 to about 70 wt.% of chlorodifluoromethane and about 10 to about 30 wt.% of
1,1-difluoroethane:

With the proportion of less than 10 wt.% of
1,1-difluoroethane, a significant improvement in the
performance coefficient is not achieved as compared with
that obtainable by a refrigerant comprising Flon-12 or
Flon-22 alone.  While 1,1-difluoroethane is inflammable
by itself, it can be made less inflammable when mixed
with chlorodifluoromethane, and is noncombustible in
the range of content of higher than 70 wt.% of the
latter.  Thus, the proportion of 1,1-difluoroethane in
the present composition is preferably less than 30 wt.%.

(2)    A refrigerant composition comprising chlorodifluoromethane and 1-chloro-1,1-difluoroethane, particularly
comprising about 95 to about 10 wt.% of chlorodifluoromethane and about 5 to about 90 wt.% of
1-chloro-1,1-difluoroethane:

With the proportion of less than 10 wt.% or
more than 90 wt.% of 1-chloro-1,1-difluoroethane, a
significant improvement in the performance coefficient
cannot be obtained as compared with that obtainable by
a refrigerant comprising Flon-12 or Flon-22 alone.

- 4 -

(3)  A refrigerant composition comprising chlorodifluoromethane and chlorotetrafluoroethane, particularly
comprising about 95 to about 10 wt.% of chlorodifluoromethane and about 5 to about 90 wt.% of
chlorotetrafluoroethane: ·

With the proportion of less than 5 wt.% or more
than 90 wt.% of chlorotetrafluoroethane, a significant
improvement in the performance coefficient cannot be
obtained as compared with that obtainable by a refrigerant
comprising Flon-12 or Flon-22 alone.

The refrigerant composition of the invention
affords a higher refrigeration capacity than when Flon-12
is used singly, and particularly the composition comprising about 90 to about 70 wt.% of chlorodifluoromethane and about 10 to about 30 wt.% of 1,1-difluoroethane or about 95 to about 10 wt.% of chlorodifluoromethane and about 5 to about 90 wt.% of 1-chloro-1,1-
difluoroethane or chlorotetrafluoroethane affords a
significantly higher refrigeration capacity.

The refrigerant composition of the invention
is suitable as a medium for a refrigeration cycle
operated at a relatively higher temperature, for
example also for a heat-pump, since the composition
has a smaller specific heat ratio than Flon-22 and
affords a compressed gas of a higher temperature than

- 5 -

when Flon-22 is used alone.

The refrigerant composition is a non-azeotropic composition. In general, with use of a single component or an azeotropic composition, the evaporation temperature in an evaporator is kept constant since the evaporation is conducted at a constant pressure. However, with a non-azeotropic composition, the temperature in an evaporator is lower at the inlet and higher at the outlet. The fluid to be cooled, which flows counter to the flow of refrigerant to effect heat exchange therebetween, generate a temperature gradient along the flow thereof even when the evaporation temperature of the refrigerant is kept constant. Namely, the difference of temperature between the refrigerant and the fluid to be cooled becomes smaller as the fluid proceeds. The refrigerant composition according to the invention, which is a non-azeotropic composition, can generate a temperature gradient in the evaporator which is similar to that generated in the fluid to be cooled, thus affording improved refrigeration efficiency, i.e. performance coefficient.

The present invention will be described with reference to the following examples and comparison examples.

Examples 1-9 and Comparison Examples 1-6

A refrigerator of 1 H.P. was operated with use

- 6 -

of a refrigerant composition as listed in Table 1 under the following conditions:

    i)    temperature of refrigerant composition at the inlet of condenser .............. 40 °C

    ii)    minimum evaporation temperature ........................ as listed in Table 1

The maximum evaporation temperature, refrigeration capacity, performance coefficient and superheating degree were determined in the respective operation. The results are given in Table 1 wherein 1,1-difluoroethane is referred to as Flon-152a.

## Table 1

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -152a | | | | | |
| Comp.Ex.1 | 100 | - | - | -40.0 | -40.0 | 1640 | 2.00 | 19.0 |
| " " 2 | - | 100 | - | -40.0 | -40.0 | 2820 | 2.01 | 48.5 |
| Example 1 | - | 90 | 10 | -40.0 | -39.3 | 2650 | 2.05 | 47.0 |
| " 2 | - | 80 | 20 | -40.0 | -38.9 | 2500 | 2.09 | 45.2 |
| " 3 | - | 70 | 30 | -40.0 | -38.6 | 2350 | 2.11 | 43.8 |
| Comp.Ex.3 | 100 | - | - | -20.0 | -20.0 | 2230 | 3.21 | 10.9 |
| " " 4 | - | 100 | - | -20.0 | -20.0 | 3690 | 3.19 | 31.5 |
| Example 4 | - | 90 | 10 | -20.0 | -19.3 | 3520 | 3.27 | 30.2 |
| " 5 | - | 80 | 20 | -20.0 | -18.9 | 3360 | 3.33 | 28.9 |
| " 6 | - | 70 | 30 | -20.0 | -18.6 | 3200 | 3.37 | 27.7 |

Table 1 (continued)

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -152a | | | | | |
| Comp.Ex.5 | 100 | – | – | 0.0 | 0.0 | 3790 | 5.67 | 5.8 |
| " " 6 | – | 100 | – | 0.0 | 0.0 | 6130 | 5.61 | 18.8 |
| Example 7 | – | 90 | 10 | 0.0 | 0.7 | 5900 | 5.78 | 17.8 |
| " 8 | – | 80 | 20 | 0.0 | 1.1 | 5680 | 5.88 | 17.0 |
| " 9 | – | 70 | 30 | 0.0 | 1.4 | 5460 | 5.97 | 16.2 |

0105831

Examples 10-27 and Comparison Examples 7-12

The same procedure as in above Example 1 was repeated except that a refrigerant composition as listed in Table 2 was used. The results are shown in Table 2 wherein 1-chloro-1,1-difluoroethane is referred to as Flon-142b.

Table 2

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -142b | | | | | |
| Comp.Ex.7 | 100 | - | - | -40.0 | -40.0 | 1640 | 2.00 | 19.0 |
| "   "   8 | - | 100 | - | -40.0 | -40.0 | 2820 | 2.01 | 48.5 |
| Example 10 | - | 90 | 10 | -40.0 | -37.4 | 2650 | 2.17 | 44.8 |
| "   11 | - | 80 | 20 | -40.0 | -34.9 | 2530 | 2.32 | 40.2 |
| "   12 | - | 70 | 30 | -40.0 | -32.8 | 2400 | 2.45 | 35.7 |
| "   13 | - | 60 | 40 | -40.0 | -31.7 | 2210 | 2.52 | 31.8 |
| "   14 | - | 50 | 50 | -40.0 | -31.6 | 1970 | 2.55 | 28.5 |
| "   15 | - | 40 | 60 | -40.0 | -32.2 | 1700 | 2.53 | 25.8 |

Table 2 (continued)

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -142b | | | | | |
| Comp.Ex.9 | 100 | - | - | -20.0 | -20.0 | 2230 | 3.21 | 10.9 |
| "  "  10 | - | 100 | - | -20.0 | -20.0 | 3690 | 3.19 | 31.5 |
| Example 16 | - | 90 | 10 | -20.0 | -17.4 | 3530 | 3.48 | 28.4 |
| "  17 | - | 80 | 20 | -20.0 | -15.0 | 3360 | 3.74 | 25.0 |
| "  18 | - | 70 | 30 | -20.0 | -13.2 | 3170 | 3.94 | 21.9 |
| "  19 | - | 60 | 40 | -20.0 | -12.1 | 2930 | 4.08 | 19.2 |
| "  20 | - | 50 | 50 | -20.0 | -11.8 | 2650 | 4.15 | 16.8 |
| "  21 | - | 40 | 60 | -20.0 | -12.1 | 2360 | 4.13 | 14.7 |

Table 2 (continued)

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -142b | | | | | |
| Comp.Ex.11 | 100 | - | - | 0.0 | 0.0 | 3790 | 5.67 | 5.8 |
| " " 12 | - | 100 | - | 0.0 | 0.0 | 6130 | 5.61 | 18.8 |
| Example 22 | - | 90 | 10 | 0.0 | 2.7 | 5940 | 6.25 | 16.5 |
| " 23 | - | 80 | 20 | 0.0 | 5.0 | 5680 | 6.84 | 14.1 |
| " 24 | - | 70 | 30 | 0.0 | 6.8 | 5360 | 7.57 | 11.0 |
| " 25 | - | 60 | 40 | 0.0 | 7.9 | 4990 | 7.69 | 10.2 |
| " 26 | - | 50 | 50 | 0.0 | 8.4 | 4580 | 7.87 | 8.6 |
| " 27 | - | 40 | 60 | 0.0 | 8.1 | 4130 | 7.86 | 7.4 |

- 13 -

## Examples 28-45 and Comparison Examples 13-18

The same procedure as in Example 1 was
repeated except that a refrigerant composition as
listed in Table 3 was used. The results are shown in
Table 3 wherein chlorotetrafluoroethane is referred
to as Flon-124.

Table 3

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -124 | | | | | |
| Comp.Ex.13 | 100 | - | - | -40.0 | -40.0 | 1640 | 2.00 | 19.0 |
| " " 14 | - | 100 | - | -40.0 | -40.0 | 2820 | 2.01 | 48.5 |
| Example 28 | - | 90 | 10 | -40.0 | -38.5 | 2650 | 2.09 | 43.2 |
| " 29 | - | 80 | 20 | -40.0 | -36.8 | 2530 | 2.17 | 37.4 |
| " 30 | - | 70 | 30 | -40.0 | -35.0 | 2410 | 2.26 | 31.7 |
| " 31 | - | 60 | 40 | -40.0 | -33.6 | 2270 | 2.33 | 26.2 |
| " 32 | - | 50 | 50 | -40.0 | -32.9 | 2080 | 2.40 | 20.0 |
| " 33 | - | 40 | 60 | -40.0 | -33.0 | 1820 | 2.36 | 16.5 |

Table 3 (continued)

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -124 | | | | | |
| Comp.Ex.15 | 100 | - | - | -20.0 | -20.0 | 2230 | 3.21 | 10.9 |
| " " 16 | - | 100 | - | -20.0 | -20.0 | 3690 | 3.19 | 31.5 |
| Example 34 | - | 90 | 10 | -20.0 | -18.5 | 3540 | 3.34 | 27.5 |
| " 35 | - | 80 | 20 | -20.0 | -17.0 | 3380 | 3.48 | 23.6 |
| " 36 | - | 70 | 30 | -20.0 | -15.5 | 3220 | 3.60 | 20.0 |
| " 37 | - | 60 | 40 | -20.0 | -14.3 | 3030 | 3.74 | 16.0 |
| " 38 | - | 50 | 50 | -20.0 | -13.6 | 2810 | 3.83 | 12.4 |
| " 39 | - | 40 | 60 | -20.0 | -13.4 | 2530 | 3.85 | 9.2 |

Table 3 (continued)

| refrige-rant | Composition (wt.%) | | | min. evaporation temperature °C | max. evaporation temperature °C | refrigeration capacity Kcal/hr | performance coefficient | super-heating degree °C |
|---|---|---|---|---|---|---|---|---|
| | Flon -12 | Flon -22 | Flon -124 | | | | | |
| Comp.Ex.17 | 100 | - | - | 0.0 | 0.0 | 3790 | 5.67 | 5.8 |
| " " 18 | - | 100 | - | 0.0 | 0.0 | 6130 | 5.61 | 18.8 |
| Example 40 | - | 90 | 10 | 0.0 | 1.5 | 5950 | 5.93 | 16.2 |
| " 41 | - | 80 | 20 | 0.0 | 3.0 | 5740 | 6.27 | 13.6 |
| " 42 | - | 70 | 30 | 0.0 | 4.4 | 5500 | 6.59 | 11.1 |
| " 43 | - | 60 | 40 | 0.0 | 5.5 | 5220 | 6.90 | 8.7 |
| " 44 | - | 50 | 50 | 0.0 | 6.3 | 4880 | 7.09 | 6.6 |
| " 45 | - | 40 | 60 | 0.0 | 6.5 | 4480 | 7.20 | 4.5 |

CLAIMS:

1. A refrigerant composition which comprises chlorodifluoromethane and a member selected from the group consisting of 1,1-difluoroethane, 1-chloro-1,1-difluoroethane and chlorotetrafluoroethane.

2. A refrigerant composition according to claim 1 which comprises about 90 to about 70 wt.% of chlorodifluoromethane and about 30 to about 10 wt.% of 1,1-difluoroethane.

3. A refrigerant composition according to claim 1 which comprises about 95 to about 10 wt.% of chlorodifluoromethane and about 90 to about 5 wt.% of 1-chloro-1,1-difluoroethane.

4. A refrigerant composition according to claim 1 which comprises about 95 to about 10 wt.% of chlorodifluoromethane and about 90 to about 5 wt.% of chlorotetrafluoroethane.

European Patent Office

**EUROPEAN SEARCH REPORT**

Application number

EP 83 71 0066

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 303 536 (ORFEO) <br> * Claims 1-4; column 1, line 26 * | 1,4 | C 09 K 5/04 |
| X | RESEARCH DISCLOSURE, no. 146, June 1976, pages 13-14, Industrial Opportunities Ltd., Havant, Hampshire, GB "Hydrogen-containing chlorofluorocarbons" * Whole Article * | 1 | |
| A | US-A-2 641 579 (BENNING) | | |
| A | FR-A-1 452 267 (MASCHINENFABRIK AUGSBURG) | | |

----

TECHNICAL FIELDS SEARCHED (Int. Cl. ³)

C 09 K 5/00

The present search report has been drawn up for all claims

| Place of search | Date of completion of the search | Examiner |
|---|---|---|
| THE HAGUE | 29-11-1983 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82